# EUROPEAN PATENT APPLICATION

(11) **EP 3 336 070 A1**
(43) Date of publication of application: **20.06.2018**
(21) Application number: 16835341.5
(22) Date of filing: 26.07.2016
(51) Int. Cl.: C05F 11/00, C05F 11/08, C05C 11/00

(54) **FERTILIZER COMPOSITION FOR IMPROVING FRUIT QUALITY AND FRUIT THINNING**

(30) Priority: 11.08.2015 KR 20150113061
(71) Applicant: Apple Co., Ltd., Daegu 41566 (KR)
(72) Inventor: SON, Tae Kwon, Daegu 42128 (KR); GI, Se Cheon, Daegu 42811 (KR); SON, Seo Ik, Daegu 42069 (KR); KIM, Ok Hee, Dalseong-gun Daegu 42969 (KR); KIM, Tae Hyung, Daegu 42751 (KR)
(74) Representative: Atkins, James Gordon John
(86) International application number: PCT/KR2016/008158
(87) International publication number: WO 2017/026701

(57) **Abstract**

The present invention provides a fertilizer composition for improving fruit quality and fruit thinning, a fruit thinning method, and a preparing method. The fertilizer composition is characterized by including: i) a fermented product of a medical herb mixture including *Houttuynia cordata Thunbandlower* grade ginseng; ii) seaweed extract; andiii) amino acids, causing unnecessary flowers to drop, having no harmful effect on bees and flower-visiting insects; not inhibiting the fertilization of flowers, causing no damage to plants, having no flower bud pinching, flower thinning and fruit thinning effects except for the right time for treatment, thereby making it possible to reduce labor costs, lead to an increase in production of large high-quality fruits having high fruit sugar content, and contribute to an increase in fruit farmhouse income through the maximum flower bud pinching, flower thinning and fruit thinning rates of about 90%.

## Description

### [Technical Field]

The present invention relates to a fertilizer composition for improving fruit quality and fruit thinning, and more specifically, to a fertilizer composition for improving fruit quality and fruit thinning, a method of preparing the same and a fruit thinning method using the same which has flower bud pinching, flower thinning and fruit thinning effects to facilitate fruit growth, has no harmful effect on bees and flower-visiting insets, does not inhibit flower fertilization, increases fruit sugar content and facilitates an increase in production of large fruits.

### [Related Art]

Among other industrial activities, agriculture has long been around since humans settled down. And it is still considered to be important and to account for a large share of food production. Along the way, a variety of research has been carried out on how to control plant growth and how to prevent damages from blight and harmful insects and finally, how to increase yields. As a result, various kinds of chemical fertilizers and pesticides have been developed and widely used. Those chemical fertilizers, in their early stage, were complemented with inorganic chemical substances such as nitrogen, phosporous and potassium. After that, plant growth promotantshave been developed through continuous research. For fruit trees such as pear trees or apple trees, multifunctional fertilizer compositions have been developed as a means to produce quality fruit.

Fruit growth depends on a smoothly supply of nutrients reserved in the previous year in tree bodies, nutrients and moisture absorbed by tree roots, and carbohydrates produced in leaves. When the reserved nutrients and the nutrients and moisture absorbed by tree roots are enough, the size of fruits is determined by the amount of carbohydrates produced in leaves. In addition, fruits start to grow when their flowers bloom and fertilization begins, and fruits in its juvenile phase grow at a moderate speed, and then, about the time when fruit thinning finishes, they grow at a rapid speed and ripen, and they start to grow at a moderate speed again by the time they are harvested. In consideration of this, preferably, a good way of growing fruit in a normal way is to limit the number of fruits. (Szot, I., 2010).

Fruit thinning is a practice carried out to block waste of nutrients and to help fruits grow well in their early stage, and it includes flower bud pinching where flower buds are removed before blooming as well as flower thinning where flowers are thinned out before fruit thinning about the time when they bloom. In theory, flower bud pinching is the most effective way of maximizing the size of fruits. However, in Korea which has unstable weather conditions before and after flowers bloom, if flower buds are pinched too early or if flowers are thinned our too early, it may cause damages to fruits and may lead to a reduction in fruit production. As a result, a preset quantity goal may not be reached. As such flower bud pinching and flower thinning are carried out before fruits are borne, they are considered to be preparatory or peripheral practices but they are necessary ones as a means to divert efforts to thin out fruits.

Fruit thinning is carried out manually or by means of chemicals. Manual fruit thinning results in a reduction in the quality of work. Also, it results in an increase in labor costs, thereby increasing production costs and putting a financial burden on farmhouses. Recently, fruit thinning using chemicals rather than the manual fruit thinning is widely used. (Awad, M. A., 2006).

Fruit thinning using chemicals, which is currently used, causes a certain number of fruits to drop by using differences in sensitivity of flowers or fruits, and there are three ways of fruit thinning using chemicals. Firstly, pollen germination is interfered with, a stigma is damaged such that pollen is blocked from pollinating the stigma, or pollen tube growth is blocked so as to cause flowers to drop. 2, 4-dinitro-6-cyclohexyl acetate is used in this practice. Secondly, imbalance in growth control substances of seeds is caused such that normal fertilization and embryo development of the seeds are inhibited so as to cause fruits to drop at an early stage. BA-6, NAA (naphthalene acetate) and NAAm (naphthalene acetamide-m), an NAA derivative, are used in this practice. However, these chemicals are not used recently because they are very sensitive to application concentration and the weather conditions at the time of application, and have side effects (Kacal, E. et al., 2012). Thirdly, tissue in vascular bundles in conducting tissue of tubers connecting bearing and branches with fruit is broken such that delivery of assimilating materials, nutrients and moisture is blocked so as to cause fruit to drop. Nak, carbaryl and other insecticides are used in this practice.

At a time when the problem of a lack of labor force in farms is aggravated in South Korea, more and more farmers are heavily dependent on fruit thinning. However, chemical thinning agents that have been used so far are very toxic and have fatal effects on bees released for helping fertilization. In addition, those thinning agents may lead to production of fruit with rough skin and cause chemical damages to fresh coleoptiles during germination. As a result, the number of produced fruits may not be controlled.

Korean Laid-Open Patent Publication No. 2005-0029273 discloses a flower thinning agent which is useful for apples, pears, peaches, grapes and persimmons and does not have harmful effects on the environment, does not cause chemical damages and are not sensitive to locations and weather conditions. As the ingredients of the flower thinning agent, a mixture of a poorly water-soluble inorganic compound and an additive is disclosed. In addition, the Korean Laid-Open Patent Publication discloses that the poorly water-soluble inorganic compound is at least one selected from the group of silicate minerals, calcium carbonate, zeolites, magnesium carbonate, and magnesium phosphate and that the additive is condensed phosphate and salt thereof, lecithin, sterols, amino acids, and sucrose fatty acid esters. However, the poorly water-soluble inorganic compound may affect flower thinning as the amount of the additive absorbed in the poorly water-soluble inorganic compound varies depending on the average particle diameter of the poorly water-soluble inorganic compound. If the particle size of the poorly water-soluble inorganic compound is big, it may cause chemical damages.

Korean Patent No. 0524116 discloses that as a compound fertilizer, a composition containing seaweed extract, humic acids, and microelements is excellent in fruit hypertrophy and fruit coloring, and Korean Patent No. 1359553 discloses that as a plant growth facilitating composition, a configuration comprising fermented extract of halophytes such as sulfur fermented extract and *salicorniaherbacea L.* etc. and oriental herb medicine extract such as *Houttuynia cordata* Thunbetc.However, such inventions provide a compound fertilizer and a plant growth facilitating composition for facilitating plant growth but do not provide a flower thinning agent.

Accordingly, the researchers have conducted research on a fertilizer for improving fruit quality and fruit thinning which causes no chemical damages, has no harmful effect on bees and flower-visiting insects, prevents alternate bearing, stabilizes plant vigor, increases fruit sugar content and facilitates an increase in production of large high quality fruits, while having a fruit thinning effect. As a result, they have come up with the present invention.

### [Description of the Invention]

### [Technical Field]

The present invention is directed to providing a fertilizer composition for improving fruit quality and fruit thinning, a fruit thinning method using the same and a method of preparing the same which facilitates fruit growth, has no harmful effect on bees and flower-visiting insects, does not inhibit the fertilization of flowers, prevents alternate bearing, stabilizes plant vigor, increases fruit sugar content and facilitates an increase in production of large high quality fruits while causing flowers to drop, wherein the fertilizer composition for improving fruit quality and fruit thinning includes: i)a fermented product of a medical herb mixture including *Houttuynia cordata Thunbandlower* grade ginseng;ii) seaweed extract; andiii) amino acids.

### [Technical Solution]

The present invention relates to a fertilizer composition for improving fruit quality and fruit thinning including: i)a fermented product of a medical herb mixture comprising *Houttuynia cordata Thunbandlower* grade ginseng; ii) seaweed extract; andiii) amino acids.

The present invention relates to a fertilizer composition for improving fruit quality and fruit thinning including: i) 100 parts by weight of the fermented product of the medical herb mixture that includes *Houttuynia cordata Thunband* lower grade ginseng; ii) 15 to 30 parts by weight of the seaweed extract; and iii) 15 to 30 parts by weight of the amino acids.

The fermented product of the medical herb mixture that includes *Houttuynia cordata Thunbandlower* grade ginseng is a fermented product in which *Houttuynia cordata Thunbandlower* grade ginseng are mixed with water, leaven, black sugar and microorganisms and they are fermented. Furthermore, the fermented product of the medical herb mixture that includes *Houttuynia cordata Thunbandlower* grade ginseng may include one or more medical herb selected from the group consisting of *BupleurumfalcatumL., Chenopodiumambrosioides L., Akebiaquinata,* and *Quercus dentate* as an additional ingredient.

The fertilizer composition may contain humic acids or microelements as an additional ingredient.

*The fertilizer composition has preferably the PH scale of 5.5 to 7.5.

The fertilizer composition for improving fruit quality and fruit thinning may have a fruit thinning effect, increase fruit sugar content and facilitate an increase in production of large high quality fruits.

Furthermore, the present invention relates to a fruit thinning method of treating fruit trees with the fertilizer composition for improving fruit quality and fruit thinning once or more times, from the time when their flowers bloom prior to the time when the their flowers finishes dropping.

Furthermore, the present invention relates to a method of preparing the fertilizer composition for improving fruit quality and fruit thinning.

Hereunder, the present invention will be described in detail.

The present invention relates to a fertilizer composition for improving fruit quality and fruit thinning including: i)a fermented product of a medical herb mixture that includes *Houttuynia cordata Thunbandlower* grade ginseng; ii) seaweed extract; andiii) amino acids.

Furthermore, the present invention relates to a method of preparing the fertilizer composition for improving fruit quality and fruit thinning including: a first step in which *Houttuynia cordata Thunbandlower* grade ginseng are mixed with one or more of microorganisms selected from the group consisting of water, leaven, black sugar and EM bacteria, bacillus bacteria, photosynthetic bacteria, lactic acid bacteria and yeast bacteria, and the mixture are aged at temperature of 15 °C to 30°C for one to twelve months to obtain an aged mixed solution; a second step in which the aged mixed solution is stored at temperature of 5 °C to 10°C for one or more months to obtain a fermented product of a medical herb mixture; and a third step in which seaweed extract and amino acids are added to the fermented product of the medical herb mixture.

In terms of the fermented product of the medical herb mixture that includes *Houttuynia cordata Thunbandlower* grade ginseng, lower grade ginseng means diseased ginseng etc. that may not belong to ginseng etc., and a collection of such ginseng is included in lower grade ginseng. Ginseng stems or ginseng leaves may be used instead of lower grade ginseng.

Furthermore, the fertilizer composition for improving fruit quality and fruit thinning includes: i) 100 parts by weight of the fermented product of the medical herb mixture that includes *Houttuynia cordata Thunband* lower grade ginseng; ii) 15 to 30 parts by weight of the seaweed extract; and iii) 15 to 30 parts by weight of the amino acids.

In the fermented product of the medical herb mixture that includes *Houttuynia cordata Thunband* lower grade ginseng, *Houttuynia cordata Thunbandlower* grade ginseng are mixed with one or more of microorganisms selected from the group consisting of water, leaven, black sugar and EM bacteria, bacillus bacteria, photosynthetic bacteria, lactic acid bacteria and yeast bacteria to be fermented. In the fermented product of the medical herb mixture that includes *Houttuynia cordata Thunband* lower grade ginseng, the herb mixture : water : Leaven : black sugar : microorganisms are mixed at a ratio of 5 to 20: 100: 2 to 4: 4 to 6: 0.01 to 0.5.

Furthermore, in the medical herb mixture that includes *Houttuynia cordata Thunband* lower grade ginseng, *Houttuynia cordata Thunband* lower grade ginseng are preferably mixed at a ratio of 1 : 0.5 to 1.5.

Furthermore, the fermented product of the medical herb mixture that includes *Houttuynia cordata Thunband* lower grade ginseng is a fermented product of a medical herb mixture in which one or more of medical herbs selected from the group consisting of *BupleurumfalcatumL., Chenopodiumambrosioides L., Akebiaquinata,* and *Quercus dentate* are used as an additional ingredient for fermentation, and in which *BupleurumfalcatumL., Chenopodiumambrosioides L., Akebiaquinata,* and *Quercus dentate* each may be included at a ratio of 1: 0.5 to 1.5: 0.5 to 1.5: 0.5 to 1.5: 0.5 to 1.5: 0.5 to 1.5.

Furthermore, the fermented product of the medical herb mixture that comprises *Houttuynia cordata Thunband* lower grade ginseng may comprise one or more selected from the group consisting of *Houttuynia cordata Thunb,* lower grade ginseng, *BupleurumfalcatumL., Chenopodiumambrosioides L., Akebiaquinata,* and *Quercus dentate.*

The fertilizer composition may contain humic acids or microelements as an additional ingredient, and on the basis of 100 parts by weight of the fermented product of the medical herb mixture, 10 to 20 parts by weight of humic acids and 0.08 to 0.15 parts by weight of microelements may be added.

Zn, Mg, Fe, Mn, B, Cl, Mo and Cu may be used as the microelements.

Furthermore, the fertilizer composition for improving fruit quality and fruit thinning may have flower bud pinching, flower thinning and fruit thinning effects.

Furthermore, the present invention relates to a fruit thinning method of treating fruit trees at the time of flowering once or more times with the fertilizer composition for improving fruit quality and fruit thinning comprising, a first treatment performed when flowers of fruit trees bloom 10 to 30% (in the case of apples, when their disc flowers bloom 50% to 70%) or when the flowers fully bloom (in the case of apples, when their disc flowers fully bloom), a second treatment performed two to three days after the first treatment, and a third treatment performed two to three days after the second treatment. The right time to treat fruit trees may vary depending on the speed at which flowers bloom depending on temperature. Preferably, if the treatment is performed once, one of the first treatment, the second treatment, or the third treatment may be chosen, and if the treatment is performed twice, one of the first treatment and the second treatment, the first treatment and the third treatment, or the second treatment and the third treatment may be chosen.

Furthermore, the present invention relates to a method of preparing a fertilizer composition.

The method of preparing a fertilizer composition includes a first step in which *Houttuynia cordata Thunbandlower* grade ginseng are mixed with one or more of microorganisms selected from the group consisting of water, leaven, black sugar and EM bacteria, bacillus bacteria, photosynthetic bacteria, lactic acid bacteria and yeast bacteria and the mixture is aged at temperature of 15 °C to 30°C for one to twelve months, a second step in which the aged mixed solution is stored in the state where direct sunlight is blocked at temperature of 5 °C to 10°C for one or more months to obtain a fermented product of a medical herb mixture, and a third step in which seaweed extract and amino acids are added to the fermented product of the medical herb mixture.

The fertilizer composition prepared by the method of preparing a fertilizer composition has preferably the PH scale of 5.5. to 7.5.

### [Advantageous effects]

As a means to facilitate fruit growth, a fertilizer composition for improving fruit quality and fruit thinning according to the present invention has flower bud pinching, flower thinning and fruit thinning effects, has no harmful effect on bees and flower-visiting insects, does not inhibit the fertilization of flowers, causes no damage to plants, has no fruit thinning effect except for the right time for treatment, and has a maximum fruit thinning rate of 90%, As a result, this makes it possible to reduce labor costs, lead to an increase in production of large high-quality fruits having high fruit sugar content, and contribute to an increase in fruit farmhouse income.

### [Description of the Drawings]

FIG.1 illustrates a flower thinning rate according to treatment with the fertilizer composition for improving fruit quality and fruit thinning. X-axis illustrates the period in which apple flowers bloom, and Y-axis illustrates a flower thinning rate of the apple flowers according to treatment with a fertilizer composition having a fruit thinning effect.
FIG.2 illustrates a fruit thinning effect and fruit formation shown in apple trees depending on whether or not the apple trees are treated with the fertilizer composition.
FIG.3 illustrates the rate of large fruit production according to treatment with the fertilizer composition.
FIG.4 illustrates the results of fruit thinning of apples in fruit farmhouses according to actual treatment with the fertilizer composition of the present invention for improving fruit quality and fruit thinning.

### [Preferred Embodiments of the Invention]

Preferred embodiments of the present invention will be described more fully hereinafter. However, the invention may be embodied in many different forms and should not be construed as limited to the embodiments set forth herein. Rather, these embodiments are provided so that the invention will be thorough and complete, and will fully convey the scope of the invention to those skilled in the art.

### <Embodiment 1. Method of preparing a fertilizer composition containing Houttuynia cordata Thunbandlower grade ginseng>

A method of preparing a fertilizer composition for improving fruit quality and fruit thinning comprises adding 0.1 to 5kg of one or more of microorganisms selected from the group consisting of water 1000ℓ, black sugar 50kg, leaven 30kg and EM bacteria, bacillus bacteria, photosynthetic bacteria, lactic acid bacteria and yeast bacteria to *houttuynia cordata thunb*andlower grade ginseng, mixing all of them and aging the mixture at temperature of 15 °C to 30°Cfor one or more months, storing it in a place of low temperature less than or equal to about 10°C in the state where direct sunlight is blocked for about one month, and putting 150kg of seaweed extract, 150kg of amino acids and humic acids to 700kg of the fermented product of the mixture stored in the place of low temperature. *Houttuynia cordata Thunb,* lower grade ginseng, and humic acids are mixed according to the conditions illustrated in the following Table 1 to prepare a fertilizer composition according to the present invention. The fertilizer composition has the PH scale of 6. Furthermore, 0.5kg to 1kg of microelements are added to the fertilizer composition to prepare a fertilizer composition for improving fruit quality and fruit thinning.

**[Table 1]**

| Conditions | Weight (kg) | | |
|---|---|---|---|
| | *Houttuynia cordata Thunb* | Lower grade ginseng | Humic acids |
| Embodiment 1-1 | 30 | 30 | 0 |
| Embodiment 1-2 | 30 | 30 | 100 |
| Embodiment 1-3 | 30 | 60 | 0 |
| Embodiment 1-4 | 30 | 60 | 100 |
| Embodiment 1-5 | 30 | 10 | 0 |
| Embodiment 1-6 | 30 | 10 | 100 |

### <Embodiment 2. Method of preparing a fertilizer composition containing Houttuynia cordata Thunbandlower grade ginseng, BupleurumfalcatumL., Chenopodiumambrosioides L., Akebiaquinata and Quercus dentate>

A method of preparing a fertilizer composition for improving fruit quality and fruit thinning comprises adding 0.1 to 5kg of one or more of microorganisms selected from the group consisting of water 1000ℓ, black sugar 50kg, leaven 30kg and EM bacteria, bacillus bacteria, photosynthetic bacteria, lactic acid bacteria and yeast bacteria to *Houttuynia cordata Thunb,* lower grade ginseng, *BupleurumfalcatumL., Chenopodiumambrosioides L., Akebiaquinata* and *Quercus dentate,* mixing all of them and aging the mixture at temperature of 15 °C to 30°C for one or more months, storing it in a place of low temperature less than or equal to about 10°C in the state where direct sunlight is blocked for about one month, and putting 150kg of seaweed extract, 150kg of amino acids and humic acids to 700kg of the fermented product of the mixture stored in the place of low temperature to prepare a fertilizer composition. *Houttuynia cordata Thunb,* lower grade ginseng, *BupleurumfalcatumL., Chenopodiumambrosioides L., Akebiaquinata, Quercus dentate* and humic acids are mixed according to the conditions illustrated in the following Table 2. The fertilizer composition has the PH scale of 6. Furthermore, 0.5kg to 1kg of microelements are added to the fertilizer composition to prepare a fertilizer composition for improving fruit quality and fruit thinning.

**[Table 2]**

| Conditi ons | Weight (kg) | | | | | | |
|---|---|---|---|---|---|---|---|
| | *Houttuy nia cordata Thunb* | Lower grade ginse ng | *Bupleurumfalca tumL.* | *Chenopodiumambros ioides L.* | *Akebiaqui nata* | *Querc* us *denta* te | Hum ic aci ds |
| Embodim ent 2-1 | 30 | 30 | 30 | 30 | 30 | 30 | 0 |
| Embodim ent 2-2 | 30 | 30 | 30 | 30 | 30 | 30 | 100 |
| Embodim ent 2-3 | 30 | 30 | 60 | 60 | 60 | 60 | 0 |
| Embodim ent 2-4 | 30 | 30 | 60 | 60 | 60 | 60 | 100 |
| Embodim ent 2-5 | 30 | 30 | 10 | 10 | 10 | 10 | 0 |
| Embodim ent 2-6 | 30 | 30 | 10 | 10 | 10 | 10 | 100 |

### <Comparison 1.Method of preparing a fertilizer composition as a target for comparison>

Each ingredient is mixed according to the conditions illustrated in the following Table 3 to prepare a fertilizer composition as a target for comparison. A method of preparing the fertilizer composition is the same as that in Embodiment 2.

**[Table 3]**

| Conditi ons | Weight (kg) | | | | | | |
|---|---|---|---|---|---|---|---|
| | *Houttuy nia cordata Thunb* | Lower grade ginse ng | *Bupleurumfalca tumL.* | *Chenopodiumambros ioides L.* | *Akebiaqui nata* | *Querc us denta te* | Hum ic aci ds |
| Compari on 1-1 | 60 | 0 | 0 | 0 | 0 | 0 | 100 |
| Compari on 1-2 | 0 | 60 | 0 | 0 | 0 | 0 | 100 |
| Compari on 1-3 | 30 | 0 | 30 | 30 | 30 | 30 | 100 |
| Compari on 1-4 | 0 | 30 | 30 | 30 | 30 | 30 | 100 |
| Compari on 1-5 | 30 | 60 | 30 | 30 | 30 | 30 | 100 |
| Compari on 1-6 | 60 | 10 | 30 | 30 | 30 | 30 | 100 |

### <Embodiment 3. Analysis of a flower thinning rate according to the time of treatment with the fertilizer composition for improving fruit quality and fruit thinning>

500 mℓ of a fertilizer composition containing the ingredients illustrated in Embodiment 2-2 described above is diluted with 500 mℓ of water. Then, this sprays on the leaves of apple trees. The period of time for treatment with the fertilizer composition ranges from one day before the blooming of their disc flowers to seven days after the full blooming of their disc flowers.

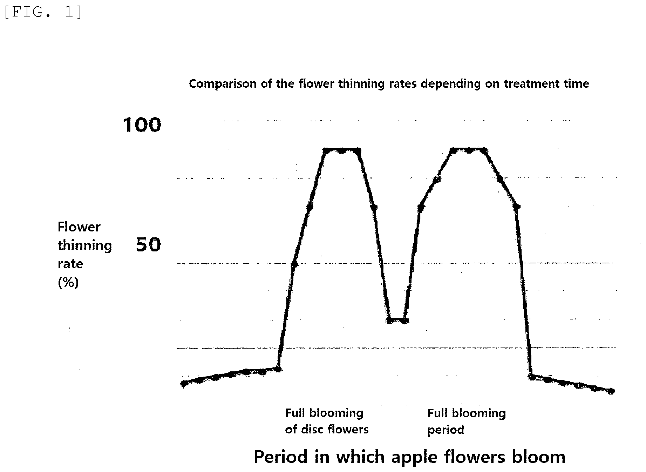

A flower thinning effect shown according to treatment with the fertilizer composition according to the present invention is illustrated in FIG.1. As in FIG.1, it turns out that a flower thinning rate is affected by the period in which the disc flowers of apple trees bloom. In particular, when the disc flowers fully bloom, the flower thinning rate reaches as much as 90%. Furthermore, such treatment is effective in flower thinning, before and after the disc flowers fully bloom, or five days before and after the disc flowers fully bloom, but not effective two to three and seven days after the disc flowers fully bloom.

On the basis of these results, to enhance the effect of flower thinning according to treatment with the fertilizer composition for improving fruit quality and fruit thinning of the present invention, the first treatment may be performed when disc flowers bloom 50% to 70%, and then the second treatment may be performed when even axillary flowers fully bloom, or the first treatment may be performed when disc flowers fully bloom, and then the second treatment may be performed on the fifth day after disc flowers fully bloom.

### <Embodiment 4. Fruit thinning effect according to treatment with the fertilizer composition for improving fruit quality and fruit thinning>

500 mℓ of a fertilizer composition containing the ingredients illustrated in Embodiment 2-2 described above is diluted with 500 mℓ of water. Then, this sprays on the leaves of apple trees. The first treatment with the fertilizer composition is carried out when the disc flowers of the apple trees bloomed 50% to 70%, and the second treatment with the fertilizer composition is carried out when even their axillary flowers fully bloomed. Then, apple trees not treated with the fertilizer composition having a fruit thinning effect are used as a control group. The fertilizer composition of the present invention sprays and then, examination on the fruit thinning effect is performed before formed fruits are manually thinned out.

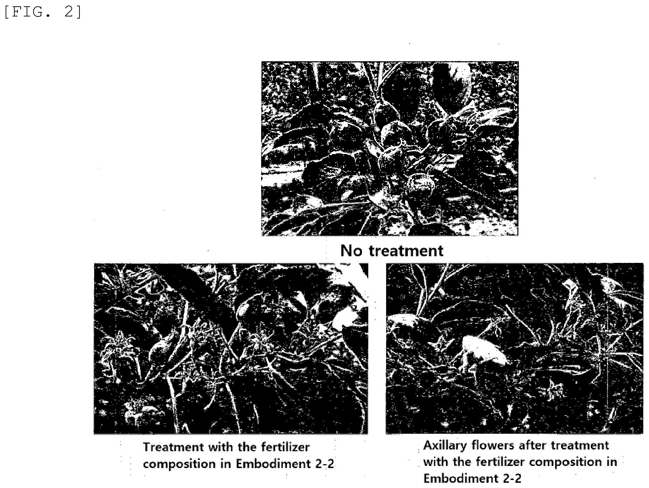

The fruit thinning effect according to treatment with the fertilizer composition in Embodiment 2-2 are the same as in FIG.2.As illustrated in FIG.2, in the case where apple trees are not treated with the fertilizer composition, all flowers result in fruits and fruits are not thinned out. On the contrary, in the case where the apple trees are treated with the fertilizer composition in Embodiment 2-2, some of the flowers result in fruits. This shows that fruit formation is limited by the fruit thinning effect.

### <Experiment 1.Examinationon the flower thinning effect and damages according to treatment with the fertilizer composition for improving fruit quality and fruit thinning)

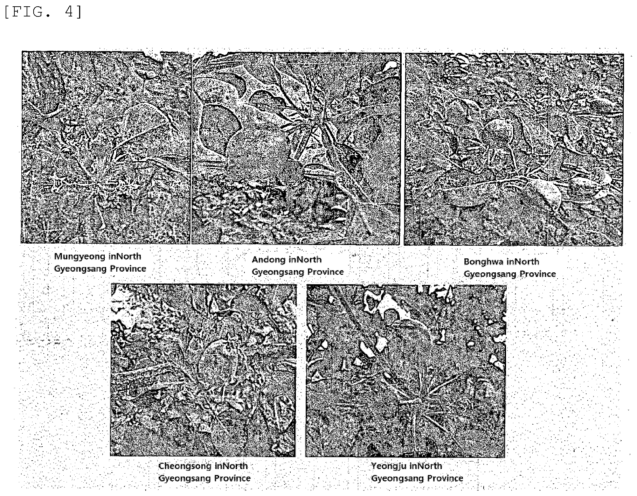

Out of the fertilizer composition for improving fruit quality and fruit thinning of the present invention, the flower thinning effect, damages (damages done to the stigma and style, and interference with pollen germination) and functionality revealing factor of Embodiment 1-2 and Embodiment 2-2 are compared with those of flower thinning agents that are currently used according to treatment with a flower thinning agent. Then, a lime sulfur mixture (Control group 1) and calcium (Control group 2) are used as the flower thinning agents. FIG.4 illustrates the results of the comparison.

**[Table.4]**

| Functionality | Experimental group 1 | Experimental group 2 | Control group 1 | Control group 2 |
|---|---|---|---|---|
| | Embodiment 1-2 | Embodiment 2-2 | Lime sulfur mixture | Calcium |
| Damage to the stigma and style | x | x | ○ | ○ |
| Interference with pollen germination | x | x | ○ | ○ |
| Functionality revealing factor | Growth | Growth | Damage | Damage |
| Flower thinning effect | Very good | Excellent | Good | Good |

As illustrated in FIG.4, compared to the control groups, the experimental groups treated with the fertilizer composition in Embodiments 1-2 and 2-2 according to the present invention have a higher rate of flower thinning, their stigma and style are not damaged and their pollen germination is not interfered with. This clearly shows that the fertilizer composition for improving fruit quality and fruit thinning according to the present invention has a powerful flower thinning effect.

### <Experiment 2. Examination on fruit quality according to treatment with the fertilizer composition for improving fruit quality and fruit thinning>

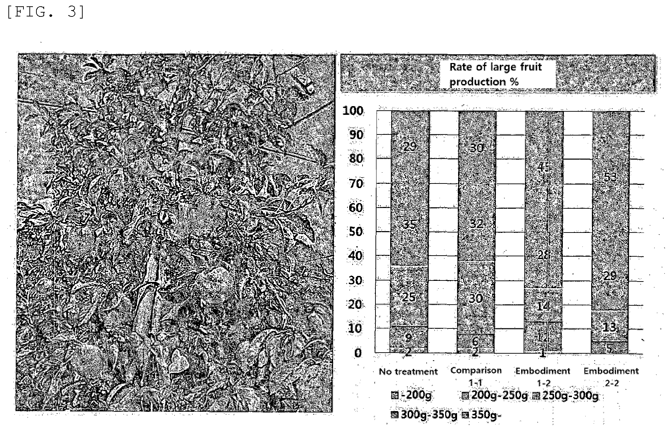

500 mℓ of each fertilizer composition in Embodiment 1, Embodimetn2, and Comparison 1 is diluted with 500 mℓ of water. Then, it is sprayed on the leaves of apple trees. The first treatment with the fertilizer compositions is carried out when the disc flowers of the apple trees bloom 50% to 70%, and the second treatment with the fertilizer compositions is carried out when even their axillary flowers fully bloom. Apple trees not treated with the fertilizer compositions are used as a control group. Fruits harvested during the usual harvest period are used to examine the quality of the fruits according to fruit thinning. The standard of fruit quality is the rate of large fruit production, and the results are illustrated in FIGS. 5 and 3.

**[Table. 5]**

| Conditions | Rate of large fruit production (%) | | | | |
|---|---|---|---|---|---|
| | 350g- | 300g-350g | 250g-300g | 200g-250g | -200g |
| Embodiment 1-1 | 40 | 25 | 17 | 15 | 3 |
| Embodiment 1-2 | 45 | 28 | 14 | 12 | 1 |
| Embodiment 1-3 | 40 | 25 | 20 | 10 | 5 |
| Embodiment 1-4 | 42 | 27 | 15 | 13 | 3 |
| Embodiment 1-5 | 41 | 25 | 16 | 12 | 6 |
| Embodiment 1-6 | 43 | 25 | 15 | 13 | 4 |
| Embodiment 2-1 | 49 | 27 | 15 | 7 | 2 |
| Embodiment 2-2 | 53 | 29 | 13 | 5 | 0 |
| Embodiment 2-3 | 47 | 25 | 17 | 9 | 2 |
| Embodiment 2-4 | 49 | 28 | 12 | 9 | 2 |
| Embodiment 2-5 | 45 | 22 | 16 | 13 | 4 |
| Embodiment 2-6 | 47 | 20 | 20 | 10 | 3 |
| Comparison 1-1 | 30 | 32 | 30 | 6 | 2 |
| Comparison 1-2 | 28 | 28 | 33 | 7 | 4 |
| Comparison 1-3 | 27 | 25 | 35 | 8 | 5 |
| Comparison 1-4 | 31 | 30 | 24 | 11 | 4 |
| Comparison 1-5 | 41 | 35 | 15 | 7 | 2 |
| Comparison 1-6 | 43 | 30 | 22 | 4 | 1 |
| No treatment | 29 | 35 | 25 | 9 | 2 |

As illustrated in FIGS. 5 and 3, in the case where the fertilizer compositions in Embodiments 1-2 and 2-2 are used, compared to the case where no fertilizer composition is used and the fertilizer composition in Comparison 1is used, there is an increase in large fruit yields. Furthermore, it turns out that the rate of large fruit production varies, depending on whether or not humic acids are included.

### <Experiment 3.Examination on the effect on an increase in fruit sugar content>

To see if the fertilizer composition according to the present invention affects an increase in fruit sugar content, the sugar content of the apples grown in Experiment 2is examined. The apples are harvested during the usual harvest period.

A portable fruit sugar content meter (MASTER-10M Series, AT AGO, Japan) and juice extracted from mashed flesh of the apples are used to measure the fruit sugar content. In doing so, ten apples are randomly chosen to measure their sugar content and their average sugar content is obtained. The results of measuring their sugar content are illustrated in FIG.6.

**[Table 6]**

| Conditions | Sugar content (brix) |
|---|---|
| Embodiment 1-1 | 14.0+0.4 |
| Embodiment 1-2 | 14.5+0.3 |
| Embodiment 1-3 | 13.9+0.3 |
| Embodiment 1-4 | 14.1+0.2 |
| Embodiment 1-5 | 14.0+0.3 |
| Embodiment 1-6 | 14.2+0.3 |
| Embodiment 2-1 | 14.7+0.4 |
| Embodiment 2-2 | 15.5±0.5 |
| Embodiment 2-3 | 14.5+0.2 |
| Embodiment 2-4 | 14.7±0.5 |
| Embodiment 2-5 | 14.5+0.3 |
| Embodiment 2-6 | 14.7±0.4 |
| Comparison 1-1 | 12.5±0.2 |
| Comparison 1-2 | 12.4±0.5 |
| Comparison 1-3 | 12.6±0.3 |
| Comparison 1-4 | 12.5±0.3 |
| Comparison 1-5 | 14.2+0.5 |
| Comparison 1-6 | 13.9+0.6 |
| No treatment | 12.3+0.3 |

As in FIG.6 illustrated above, the apples treated with the fertilizer composition in Embodiments 1 and 2 have much more sugar content than those not treated with a fertilizer composition and with the fertilizer composition in Comparison 1.

### <Embodiment 5. Treatment with the fertilizer composition for improving fruit quality and fruit thinning in fruit farmhouses>

To examine the fruit thinning effect of the fertilizer composition for improving fruit quality and fruit thinning according to the present invention, the fertilizer composition is actually sprayed on apple trees in farmhouses in MungyeongAndong, Bonghwa, Cheongsong andYeongju inNorth Gyeongsang Province.

500 mℓ of the fertilizer composition in Embodiment 2-2 is diluted with 500 mℓ of water. Then, it is sprayed on the leaves of the apple trees. The first treatment with the fertilizer composition is carried out when the disc flowers of the apple trees bloom 50% to 70%, and the second treatment with the fertilizer composition is carried out when even their axillary flowers fully bloom. The results are illustrated in FIG. 4.

As illustrated in FIG.4, it turns out that the fertilizer composition according to the present invention has the fruit thinning effect.

## Claims

1. A fertilizer composition for improving fruit quality and fruit thinning comprising:
i)a fermented product of a medical herb mixture comprising, *Houttuynia cordata Thunb,* lower grade ginseng, *BupleurumfalcatumL., Chenopodiumambrosioides L., Akebiaquinata,* and *Quercus dentate;*
ii) seaweed extract; and
iii) amino acids.

2. According to claim 1,
The fertilizer composition for improving fruit quality and fruit thinning comprising:
i) 100 parts by weight of the fermented product of the medical herb mixture comprising *Houttuynia cordata Thunb,* lower grade ginseng, *BupleurumfalcatumL., Chenopodiumambrosioides L., Akebiaquinata,* and *Quercus dentate;*
ii) 15 to 30 parts by weight of the seaweed extract; and
iii) 15 to 30 parts by weight of the amino acids.

3. According to claim 1,
wherein the fermented product of the medical herb mixture is a product in which one or more of microorganisms selected from the group consisting of the medical herb mixture comprising *Houttuynia cordata Thunb,* lower grade ginseng, *BupleurumfalcatumL., Chenopodiumambrosioides L., Akebiaquinata,* and *Quercus dentate,* water, leaven, black sugar and EM bacteria, *bacillus* bacteria, photosynthetic bacteria, lactic acid bacteria and yeast bacteria are mixed and fermented.

4. According to claim 3,
wherein the fermented product of the medical herb mixture is a mixture in which the medical herb mixture : water :leaven : black : sugar and microorganisms are mixed at a ratio of 5 to 20 : 100 : 2 to 4 : 4 to 6 : 0.01 to 0.5. and fermented.

5. According to any one of claims 1 to 4,
wherein the medical herb mixture is a mixture in which *Houttuynia cordata Thunb,* lower grade ginseng, *BupleurumfalcatumL., Chenopodiumambrosioides L., Akebiaquinata,* and *Quercus dentate* are mixed at a ratio of 1: 0.5 to 1.5: 0.5 to 1.5: 0.5 to 1.5: 0.5 to 1.5: 0.5 to 1.5.

6. According to claim 1,
wherein the fertilizer composition for improving fruit quality and fruit thinning contains humic acids as an additional ingredient.

7. According to claim 1,
wherein the fertilizer composition for improving fruit quality and fruit thinning contains microelements as an additional ingredient.

8. According to claim 1,
wherein the fertilizer composition for improving fruit quality and fruit thinning has flower bud pinching, flower thinning and fruit thinning effects.

9. A fruit thinning method using the fertilizer composition for improving fruit quality and fruit thinning according to any one of claims 1 to 4,
wherein the fruit thinning method of performing treatment with the fertilizer composition once or more times comprises performing a first treatment when flowers of fruit trees bloom 10 to 30%, performing a second treatment two to three days after the first treatment, and performing a third treatment two to three days after the second treatment.

10. A method of preparing a fertilizer composition for improving fruit quality and fruit thinning comprising:
a first step in which *Houttuynia cordata Thunb,* lower grade ginseng,
*BupleurumfalcatumL., Chenopodiumambrosioides L., Akebiaquinata,* and *Quercus dentate* are mixed with one or more of microorganisms selected from the group consisting of water, leaven, black sugar and EM bacteria, bacillus bacteria, photosynthetic bacteria, lactic acid bacteria and yeast bacteria and they are aged at temperature of 15 °C to 30°Cfor one to twelve months such that an aged mixed solution may be obtained;
a second step in which the aged mixed solution is stored at temperature of 5 °C to 10°C for one or more months such that a fermented product of a medical herb mixture may be obtained; and
a third step in which seaweed extract and amino acids are added to the fermented product of the medical herb mixture.
